# EUROPÄISCHE PATENTSCHRIFT

(11) **EP 2 386 771 B1**
(45) Veröffentlichungstag und Bekanntmachung des Hinweises auf die Patenterteilung: **26.08.2015**
(21) Anmeldenummer: 11003975.7
(22) Anmeldetag: 13.05.2011
(51) Int. Cl.: F16B 47/00

(54) **Saugnapf mit Haltekraftanzeige**
Suction cup with suction strength display
Ventouse dotée d'un indicateur de la force de retenue

(30) Priorität: 14.05.2010 DE 102010020477; 01.07.2010 DE 102010025738
(43) Veröffentlichungstag der Anmeldung: 16.11.2011
(73) Patentinhaber: Tormaxx GmbH, 41199 Mönchengladbach (DE)
(72) Erfinder: Koch, Hubert, 41199 Mönchengladbach (DE)
(74) Vertreter: Castell, Klaus

(56) Entgegenhaltungen:
- AU-B2- 2006 209 367
- DE-A1-102005 045 681
- DE-A1-102007 002 756
- DE-A1-102008 015 648
- DE-U1-202004 003 324
- DE-U1-202008 013 507
- JP-A- 2006 064 168
- KR-U- 20090 004 993
- US-A1- 2004 240 972
- US-A1- 2004 246 314
- US-A1- 2008 011 918
- US-B1- 6 437 560
- US-B1- 7 455 269

## Beschreibung

Die Erfindung betrifft eine Vorrichtung zur Befestigung auf einer Fläche mit einem Saugteller.

Bei heutigen Befestigungsvorrichtungen mit einem Saugnapf, wie sie beispielsweise in Fahrzeugen zur Befestigung von Navigationsgeräten eingesetzt werden, kann durch verschiedene Umstände das Vakuum zu schwach werden, um die befestigten Geräte zu halten.

Bei aus dem Stand der Technik bekannten heutigen Saugnapfhaltern kann die Haltekraft durch unterschiedlich ausgestaltete Systeme mit einer Hebelfunktion erzeugt werden. Ob der Unterdruck zwischen Saugteller und Arbeitsgegenfläche noch ausreichend ist, merkt man, wenn der Halter abfällt. Auch bei einer händischen Prüfung durch den Fahrer, wie von den Herstellern vor Antritt der Fahrt gefordert, löst sich der Halter bei nicht ausreichender Haltekraft, was eine erneute Montage und ein erneutes Aktivieren des Hebelsystems erfordert. Dazu sind in der Regel zwei Hände notwendig und das System muss neu ausgerichtet werden.

Bei bekannten Systemen, die mit einem Federsystem arbeiten, bemerkt man die fehlende Haltekraft ebenfalls erst nach dem Lösen des Halters. Zum erneuten Befestigen des Systems muss nun der Halter mit dem aufmontierten Gerät, z. B. einem Navigationsgerät, an die Arbeitsgegenfläche gedrückt werden. Durch das anmontierte Gerät kann es hierbei zu Montageschwierigkeiten kommen.

Saughalter, die mit den weitverbreiteten Spannmechaniken, wie Excenter, Kurven oder anderen Hebelmechaniken, die Zugkraft auf den Saugteller ausüben, ausgestattet sind, haben ebenso wie die Systeme, die mit Federn unterschiedlicher Bauweise, wie z. B. zusätzliche Kunststoffkäfige oder andere federnde Elemente, den Nachteil, dass immer nur die größtmögliche mechanische Zugkraft auf den Saugteller ausgeübt wird. Das führt im alltäglichen Betrieb zu häufigen Problemen, da sich die Saugelemente schon bei geringen Veränderungen der Umgebungsbedingungen lösen. So lösen sich die gängigen Saugnapfhalter beispielsweise bei Frost oder großer Hitze.

Ebenso entstehen bei unterschiedlichen Untergründen erheblich verschiedene Anforderungen an den zu erzeugenden Unterdruck in der Saugkammer des Saugelementes. So löst sich beispielsweise bei glatten Oberflächen ein Saughalter schneller bei wechselnden Umgebungsbedingungen, wenn der Unterdruck zu hoch ist. Bei schockmäßig auftretenden Spitzenbelastungen, wie z. B. bei einem Unfall, bricht der Unterdruck durch die fehlende Elastizität im Saugteller sofort zusammen und der Halter löst sich und wird bei einer Verwendung in Fahrzeugen zu einem gefährlichen Geschoss.

Durch die technische Möglichkeit, die Saugteller heute aus verschiedensten Materialien herzustellen, ist es technisch möglich, Saugteller mit extrem weichen Randzonen herzustellen. Diese Saugteller können auch auf strukturierten Arbeitsgegenflächen wie beispielsweise Armaturentafeln befestigt werden. Auf diesen Oberflächen kann der Saugdruck durch eine entsprechend ausgelegte Druckfeder eingestellt werden, es ist jedoch immer ein Druckverlust über einige Tage oder Wochen festzustellen. Auch sind die an diesen Stellen montierten Geräte in der Funktion erweitert eingesetzt, z. B. als Freisprecheinrichtung. Der Fahrer nutzt diese Geräte dann als Eingabeterminal, was zu einer zusätzlichen Belastung der Saugverbindung führt.

Die bisher bekannten Systeme sind in der Regel nicht in der Haltekraft einstellbar oder können nur während der Produktion auf eine bestimmte Saugstärke eingestellt werden. Eine Anpassung an die unterschiedlichen Oberflächen beziehungsweise an unterschiedliche Umgebungsbedingungen ist nach der Herstellung nicht mehr möglich.

Die JP 2006 064168 A beschreibt eine Vorrichtung zur Befestigung auf einer Fläche mit einem Saugteller und einer Einrichtung zur Anzeige der Saugkraft.

Ausgehend von dieser Vorrichtung stellt sich die Aufgabe, eine Vorrichtung zur Befestigung auf einer Fläche mit einem Saugteller zu schaffen, die eine verbesserte Befestigung erlaubt.

Diese Aufgabe wird durch eine Vorrichtung mit den Merkmalen des Patentanspruchs 1 gelöst.

Die Messvorrichtung arbeitet elektronisch.

Ferner weist die Vorrichtung eine Anzeige zur Anzeige der Saugkraft auf, welche die von der Messvorrichtung ermittelten Werte, nämlich Arbeitslage des Saugtellers und damit die Saugkraft, anzeigt.

Es ist von Vorteil, wenn die Vorrichtung mit einer akustischen und/oder einer optischen Anzeige ausgestattet ist, so dass unterschiedliche Wahrnehmungskanäle des Benutzers angesprochen werden können.

Es ist auch möglich, über eine Sendefunktion das Signal der Haltekraft an einen Empfänger zu senden. Der Empfänger kann beispielsweise auch das eingesetzte Gerät sein. So kann der Zustand der sicheren Funktion oder das Nachlassen der Haltekraft des Halters im Display des eingesetzten Gerätes angezeigt werden. Die gemessenen Saugkraftwerte können durch eine elektronische Auswerteinheit bei elektronischer Positionserfassung in eine stufenlose Anzeige umgewandelt werden und so zum Beispiel in Prozent oder in einem optischen Grün-Rotbalken angezeigt werden. Auch sich ändernde, akustische Signale können erzeugt werden.

Bei einer elektronischen Ausgestaltung ist es von Vorteil, wenn die Vorrichtung eine Stromversorgung aufweist oder mit einer Stromversorgung verbindbar ist. Weist die Vorrichtung ein Gehäuse auf, so kann in diesem eine Batterie oder ein Akku untergebracht sein, der die notwendige elektrische Energie zur Verfügung stellt.

Damit ein Auswechseln der Batterie oder ein Nachladen des Akkus nicht erforderlich ist, ist es von Vorteil, dass das System mit einem Solarmodul ausgestattet ist. Dieses kann beispielsweise ein Teil des Gehäuses sein. Auch eine Verbindung mit einer externen Stromquelle ist möglich. Die Stromquelle kann auch das im Halter eingesetzte Gerät sein.

Von Vorteil ist, wenn die Vorrichtung ein Gehäuse aufweist und das Gehäuse kleiner als der Saugnapf ist. In diesem Fall ragt der Saugteller wesentlich über das Gehäuse hinaus. So drückt das Gehäuse auf den Rand des Saugtellers und führt dadurch zu einer besseren Befestigung.

Um ein Ablösen des Saugtellers zu ermöglichen, ist weiter von Vorteil, wenn dieser eine Lasche aufweist. Durch Ziehen an dieser Lasche kann der Saugteller von der Oberfläche, auf der er befestigt ist, wieder entfernt werden.

Die Vorrichtung weist eine Betätigungsvorrichtung, insbesondere einen Betätigungsknopf zum Erhöhen der Saugkraft auf. Durch den Betätigungsknopf kann bei nachlassendem Unterdruck zwischen Saugteller und Arbeitsgegenfläche nur durch einen einzigen Druck auf den Betätigungsknopf das System in die optimale Arbeitslage zurückversetzt werden und somit ist ohne händischen Funktionstest und auch ohne ein umständliches neues Justieren des Systems die optimale und sichere Funktion gewährleistet.

Eine durch den Betätigungsknopf mögliche einhändig zu bedienende Funktion kann durch den Bediener, wie beispielsweise einen Autofahrer, bei jeder angemessenen Situation, wie z. B. an einem Stopp bei einer roten Ampel ausgeführt werden. Bereits ein Druck auf den Betätigungsknopf führt zu einem Wiederherstellen des Systems sowohl für die Messvorrichtung als auch für die Anzeige sowie die Betätigungsvorrichtung. Dabei ist ein Druck vor Antritt der Fahrt so leicht auszuführen wie der notwendige Blick in den Rückspiegel. Diese Funktion trägt damit erheblich zur sicheren Befestigung bei, ohne dass das Gesamtsystem justiert werden muss.

Außerdem ist es von Vorteil, wenn die Befestigungsvorrichtung ein federndes Element aufweist. Dieses kann für sämtliche der drei Funktionen - die Messvorrichtung, die Anzeigevorrichtung sowie die Betätigungsvorrichtung - verwendet werden.

Dabei kann das federnde Element eine Schraubenfeder sein. Insbesondere kann der Anteil der Feder, der wirksam ist, verstellt werden. Dadurch können die Federstärke und damit die Saugstärke und damit die Haltekraft eingestellt werden.

Das federnde Element kann jedoch auch austauschbar sein. Auch dadurch ist eine individuelle Anpassung auf die Anwendung möglich sowie eine Verwendung in den verschiedensten Anwendungsbereichen denkbar. Die Haltekraft kann damit zu einem späteren Zeitpunkt und nicht mehr nur noch während der Produktion auf eine bestimmte Saugstärke eingestellt werden.

Vorteilhafterweise handelt es sich bei dem federnden Element um eine Kegelfeder. Dies hat den Vorteil, dass wenn das federnde Element zusammengedrückt wird, die Windungen der Feder ineinander gedrückt werden können. So kann die Feder vollständig flach zusammengedrückt werden.

Besonders von Vorteil ist, wenn das federnde Element entgegen der Saugkraft des Saugnapfes gegen die in einer Hülse gelagerte Betätigungsvorrichtung drückt. Der erfindungsgemäße Sicherheits-Saugnapfhalter basiert damit auf einem Zusammenwirken einer Federfunktion, in Verbindung mit einem direkt am Saugteller angeflanschten Betätigungsknopf. Der Betätigungsknopf misst dabei gleichzeitig die Lagekontrolle des Saugtellers exakt und registriert auch minimalste Veränderungen. Entscheidend für die Präzision der Lagerkontrolle des Saugtellers ist die Entkopplung von Saugteller und der Begrenzungseinrichtung, in der der Betätigungsknopf geführt wird.

Durch die geeignete Konstruktion des Verhältnisses vom Saugteller zum Halteelement des Saugtellers ist es möglich, die exakte Lage des Saugtellers zu bestimmen. Der Betätigungsknopf dient damit zugleich auch als Messvorrichtung.

Werden Lagemarkierungen am Betätigungsknopf der Vorrichtung angebracht, wobei der Betätigungsknopf auch gleichzeitig Halteelement der Druckfeder ist, geben diese exakt Auskunft über die Arbeitslage des Saugtellers. Die verschiedenen Markierungen signalisieren direkt den Arbeitszustand und werden so zur Anzeigevorrichtung. Auch warnende Markierungen, die nur Hinweise auf eine Veränderung sind, lassen sich realisieren. So kann z. B. auch während langer Autofahrten durchaus ein Hinweis zu sehen sein, der keine sofortige Handlung erfordert.

Wenn der Betätigungsknopf in einer exakten Führung des Gehäuses für den Saugteller montiert ist, ist es möglich durch Mikroschalter die Position des Betätigungsknopfes abzufragen. Dazu können zum Beispiel im Betätigungsknopf unterschiedlich tiefe Ringe oder Ausnehmungen oder Erhöhungen eingebracht sein. Durch die geeignete Positionierung der Mikroschalter ist nun die jeweilige kritische oder nichtkritische Arbeitslage des Saugtellers an elektronische oder elektrische Elemente zu übermitteln. Diese können dann ein optisches und/oder akustisches Signal auslösen.

Die Position des Betätigungsknopfes wird dadurch abgefragt, dass sowohl im Betätigungsknopf als auch in der diesen haltenden Hülse eine Spule angeordnet wird und die Verschiebung dieser Spulen zueinander gemessen wird.

Schließlich ist auch von Vorteil, wenn die Vorrichtung einen Vorspannhebel aufweist, der die Betätigungsvorrichtung entgegen der Kraft des federnden Elements fixiert. Bei einer vorteilhaften Ausgestaltung hält der Vorspannhebel die Betätigungsvorrichtung vollständig in der Hülse, in der diese gelagert ist. Der Betätigungsknopf steht dann nicht über diese hervor. Bei besonders bevorzugter Ausgestaltung entspricht diese Position des Betätigungsknopfes gerade der Ruhelage des Saugnapfes. Dessen Membran befindet sich in einem vollständig ausgestreckten Zustand. Wird der Vorspannhebel entfernt, wirkt die Kraft des federnenden Elements und zieht den Saugnapf in der Mitte von der Unterlage weg. Hierdurch entsteht der maximal mögliche Unterdruck.

Die Erfindung wird anhand eines Ausführungsbeispiels unter Bezugnahme auf die Zeichnung näher erläutert und beschrieben.

Es zeigen:
- Fig. 1: eine Schnittzeichnung durch eine nicht erfindungsgemäße Haltevorrichtung mit Saugnapf,
- Fig. 2: die Haltevorrichtung mit Saugnapf in Ruhestellung,
- Fig. 3: die Haltevorrichtung mit Saugnapf in Arbeitsstellung und
- Fig. 4: eine nicht erfindungsgemäße Haltevorrichtung mit Saugnapf mit einem Vorspannhebel und
- Fig. 5: einen Teil einer Haltevorrichtung mit einer elektronischen Messvorrichtung und elektronischer Anzeige.

Die Haltevorrichtung 1 mit einem Gehäuse 2 und einem Saugnapf 3 befindet sich in Arbeitsstellung. Dies ist erkennbar, da der Betätigungsknopf 4 in einer an dem Gehäuse 2 befestigten Hülse 5 nach unten gedrückt ist. Wird der Befestigungsknopf 4 nach unten gedrückt entweicht die Luft unter dem Saugnapf 3. Das Gummimaterial des Saugnapfes 3 dichtet diesen gegen eine Arbeitsfläche (nicht abgebildet) ab. Wird der Betätigungsknopf 4 losgelassen, drückt die Druckfeder 6 den Betätigungsknopf 4, der mittels eines Verbindungsstücks 7 und der Schraube 8 mit dem Saugnapf 3 verbunden ist, nach oben und das Vakuum entsteht. Bei der so entstanden Arbeitstellung des Saugnapfes 3 wird der Betätigungsknopf 4 über die Verbindung 7 wie abgebildet durch das Vakuum am Saugnapf 3 in der Hülse 5 gehalten. Das Gehäuse 2 weist zudem eine Befestigungsvorrichtung 9 mit einer Bohrung 10 auf, an der beispielsweise ein Halter für ein Kleingerät befestigt werden kann.

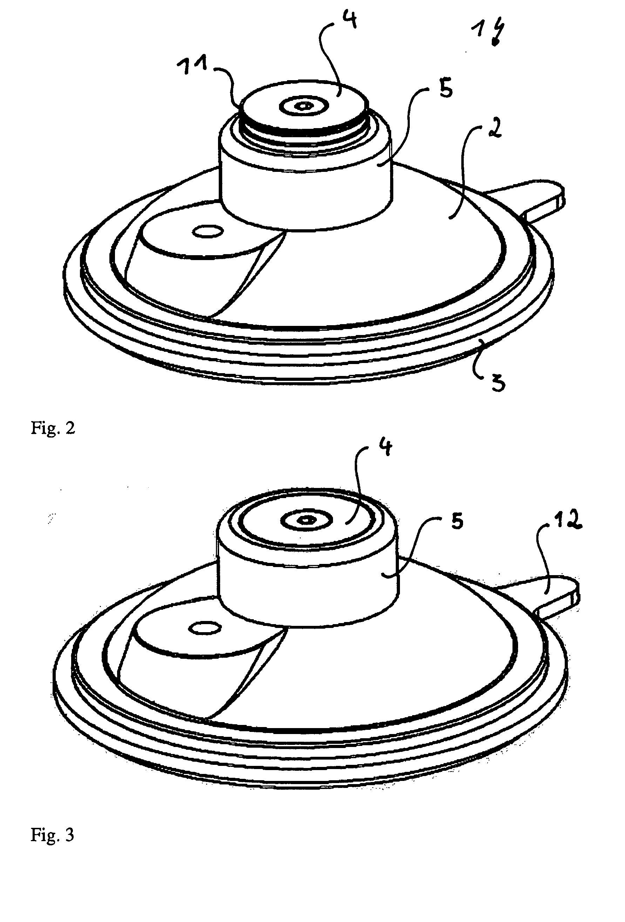

Die Befestigungsvorrichtung 1 mit Saugnapf 3 und Gehäuse 2 in Figur 2 befindet sich hingegen in Ruhestellung. Hier wird der Betätigungsknopf 4 in der Hülse 5 durch die Druckfeder (nicht sichtbar) permanent nach oben gedrückt. Eine farbige Markierung 11 ist sichtbar. Diese dient auch zur Anzeige der Saugkraft im Betrieb der Haltevorrichtung l. Entweicht nämlich ausgehend von der Arbeitsstellung mit der Zeit das Vakuum, wird die farbige Markierung oder werden auch mehrere farbige Markierungen sichtbar. So kann visualisiert werden, dass die Saugkraft noch ausreichend oder gegebenenfalls nicht mehr ausreichend ist.

Die Haltevorrichtung 1 in Figur 3 befindet sich wiederum in Arbeitsstellung. Der Betätigungsknopf ist in der Hülse 5 nach unten gedrückt. Die farbige Markierung ist nicht mehr sichtbar. Der Saugnapf 3 bildet mit der Arbeitsfläche das größtmögliche Vakuum.

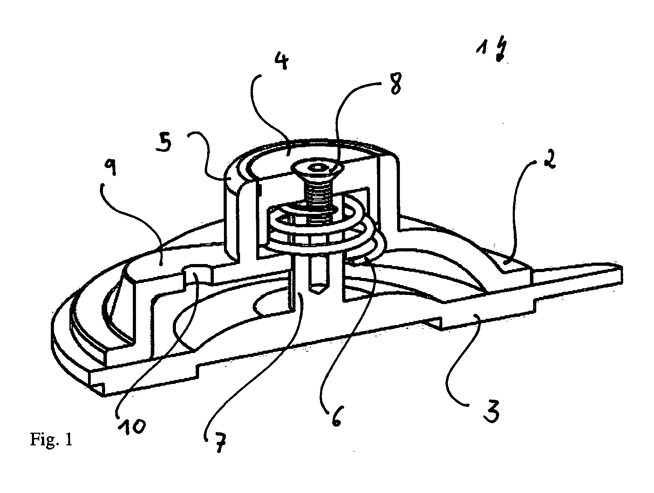

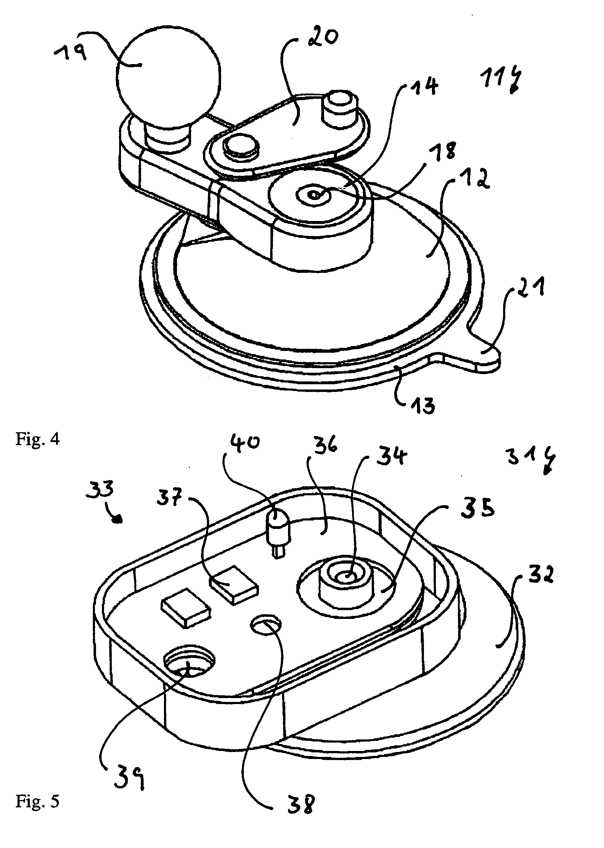

Die Haltevorrichtung 11 mit einem Gehäuse 12 und einem Saugnapf 13 befindet sich ebenfalls in Arbeitsstellung. Dies ist auch hier erkennbar, da der Betätigungsknopf 14 in einer am Gehäuse 12 befestigten Hülse 15 nach unten gedrückt ist. Zusätzlich zu den in Figur 1 bis 3 abgebildeten Befestigungsvorrichtungen weist die in Figur 4 dargstellte Befestigungsvorrichtung 11 einen Vorspannhebel 21 auf. Dieser kann über den Befestigungsknopf 14 geschoben werden, wodurch dieser nach unten gedrückt wird. Die Membran des Saugnapfes 13 befindet sich dann in einer entspannten Stellung, so dass diese beim Aufsetzen auf eine Oberfläche vollständig aufliegt. Wird der Vorspannhebel 20 zur Seite geschoben, drückt die Druckfeder 16, welche als Kegelfeder ausgebildet ist, den Betätigungsknopf 14 nach oben. Dieser ist mittels eines Verbindungsstücks 17 und der Schraube 18 mit dem Saugnapf 13 verbunden. So wird der Saugnapf 13 nach oben gezogen und das Vakuum entsteht. Soll der Saugnapf 13 wieder von der Oberfläche entfernt werden so ist dies durch ziehen an der Lasche 21 möglich.

Zusätzlich weist die Befestigungsvorrichtung 11 einen Kugelkopf 19 auf, auf den beispielsweise ein mit einem entsprechenden Gegenstück versehenes Kleingerät aufgesteckt werden kann.

In Figur 5 ist ein Teil einer Haltevorrichtung 31 abgebildet. Dieser besteht aus dem Gehäuse 32 sowie der Mess- und Anzeigevorrichtung 33. Der Saugnapf selbst ist nicht abgebildet. Der Betätigungsknopf 34 befindet sich in der Hülse 35. Die Position der beiden Elemente zueinander wird durch Spulen gemessen, die in den beiden Elementen angeordnet sind. Das Ergebnis dieser Messung wird durch die auf der Platine 36 befindliche Elektronik 37 ausgewertet. Hierbei werden die Werte der Referenzspulen 38, 39 zur Auswertung herangezogen. Das Ergebnis dieser Auswertung wird über die Leuchtdiode 40 ausgegeben. Der Gesamtweg des Betätigungsknopfes in der Hülse kann dabei etwa 2 mm bis 2,5 mm betragen. Die Diode würde dann für einen Bereich von 0 mm bis 0,6 mm grün anzeigen, zwischen 0,6 mm und 1,1 mm gelb leuchten und danach ein rotes Licht ausgeben, um den Bediener darauf hinzuweisen, dass eine sichere Befestigung nicht mehr gewährleistet ist.

## Patentansprüche

1. Vorrichtung zur Befestigung auf einer Fläche mit einem Saugteller, wobei die Vorrichtung eine Messvorrichtung zum Messen der Saugkraft und eine Anzeige zur Anzeige der Saugkraft, die die von der Messvorrichtung ermittelten Werte, nämlich die Arbeitslage des Saugtellers und damit die Saugkraft, anzeigt, aufweist, und die Vorrichtung eine Betätigungsvorrichtung zum Erhöhen der Saugkraft aufweist, **dadurch gekennzeichnet, dass** sowohl in der Betätigungsvorrichtung als auch in der diese haltenden Hülse eine Spule angeordnet ist und dadurch die Verschiebung der Betätigungsvorrichtung zur Hülle messbar ist.

2. Vorrichtung nach Anspruch 1, ***dadurch gekennzeichnet, dass*** die Messvorrichtung und/oder die Anzeige elektronisch ist.

3. Vorrichtung nach Anspruch 1 oder Anspruch 2, ***dadurch gekennzeichnet, dass*** sie eine Stromversorgung aufweist und/oder sie mit einer Stromversorgung verbindbar ist.

4. Vorrichtung nach einem der Ansprüche 1 bis 3, ***dadurch gekennzeichnet, dass*** sie ein Gehäuse aufweist, wobei das Gehäuse kleiner als der Saugteller ist.

5. Vorrichtung insbesondere nach einem der vorhergehenden Ansprüche, ***dadurch gekennzeichnet, dass*** sie ein federndes Element aufweist.

6. Vorrichtung nach Anspruch 5, ***dadurch gekennzeichnet, dass*** das federnde Element austauschbar ist.

7. Vorrichtung nach einem der Ansprüche 5 oder 6, ***dadurch gekennzeichnet, dass*** das federnde Element eine Kegelfeder ist.

8. Vorrichtung nach einem der Ansprüche 5 bis 7, ***dadurch gekennzeichnet, dass*** das federnde Element entgegen der Saugkraft des Saugtellers gegen die in einer Hülse gelagerte Betätigungsvorrichtung drückt.

9. Vorrichtung nach einem der Ansprüche 5 bis 8, ***dadurch gekennzeichnet, dass*** sie einen Vorspannhebel aufweist, der die Betätigungsvorrichtung entgegen der Kraft des federnden Elements fixiert.

## Claims

1. A device for fastening to a surface with a suction plate, wherein the device comprises a measuring device for measuring the suction strength and a display for displaying the suction strength, which comprises the values ascertained by the measuring device, that is the working position of the suction plate and thus the suction strength, and the device comprises an actuating device for increasing the suction strength, ***characterized in that*** a coil is arranged both in the actuating device and in the sleeve holding the same, and **in that** thereby the displacement of the actuating device relative to the sleeve is measurable.

2. The device according to claim 1, ***characterised in that*** the measuring device and/or the display is electronic.

3. The device according to claim 1 or claim 2, ***characterized in that*** it comprises a power supply and/or **in that** it is connectable to a power supply.

4. The device according to one of claims 1 to 3, ***characterised in that*** it comprises a housing, wherein the housing is smaller than the suction plate.

5. The device according to one of the preceding claims, ***characterised in that*** it comprises a spring-loaded element.

6. The device according to claim 5, ***characterised in that*** the spring-loaded element is exchangeable.

7. The device according to one of claims 5 or 6, ***characterised in that*** the spring-loaded element is a helical spring.

8. The device according to one of claims 5 to 7, ***characterized in that*** the spring-loaded element presses against the actuating device mounted in a sleeve, contrary to the suction strength of the suction plate.

9. The device according to one of claims 5 to 8, ***characterised in that*** it comprises a pre-tensioned lever, which fixes the actuating device contrary to the force of the spring-loaded element.

## Revendications

1. Dispositif pour la fixation sur une surface avec une ventouse, le dispositif présentant un dispositif de mesure pour mesurer la force d'aspiration et un afficheur pour afficher la force d'aspiration, lequel affiche les valeurs déterminées par le dispositif de mesure, à savoir la position de travail de la ventouse et donc la force d'aspiration, et le dispositif présentant un dispositif d'actionnement pour augmenter la force d'aspiration, ***caractérisé en ce qu**'*une bobine est disposée dans le dispositif d'actionnement tout comme également dans la gaine maintenant celui-ci, et le déplacement du dispositif d'actionnement par rapport à la gaine pouvant ainsi être mesuré.

2. Dispositif selon la revendication 1, ***caractérisé en ce que*** le dispositif de mesure et/ou l'afficheur sont électroniques.

3. Dispositif selon la revendication 1 ou la revendication 2, ***caractérisé en ce qu***'il présente une alimentation en courant et/ou en ce qu'il peut être relié à une alimentation en courant.

4. Dispositif selon l'une des revendications 1 à 3, ***caractérisé en ce qu***'il présente un boîtier, le boîtier étant plus petit que la ventouse.

5. Dispositif, en particulier selon l'une des revendications précédentes, ***caractérisé en ce qu*'**il présente un élément élastique.

6. Dispositif selon la revendication 5, ***caractérisé en ce que*** l'élément élastique est interchangeable.

7. Dispositif selon l'une des revendications 5 ou 6, ***caractérisé en ce que*** l'élément élastique est un ressort conique.

8. Dispositif selon l'une des revendications 5 à 7, ***caractérisé en ce que*** l'élément élastique pousse contre le dispositif d'actionnement logé dans une gaine à l'encontre de la force d'aspiration de la ventouse.

9. Dispositif selon l'une des revendications 5 à 8, ***caractérisé en ce qu***'il présente un levier de précontrainte qui fixe le dispositif d'actionnement à l'encontre de la force de l'élément élastique.
